# DEMANDE DE BREVET EUROPEEN

(11) **EP 2 037 661 A1**
(43) Date de publication de la demande: **18.03.2009**
(21) Numéro de dépôt: 07291099.5
(22) Date de dépôt: 13.09.2007
(51) Int. Cl.: H04M 1/05, H04M 1/60

(54) **Boîtier pour une oreillette avec un connecteur de chargement USB**

(71) Demandeur: Modelabs Technologies Limited, Hong Kong (HK)
(72) Inventeur: Ponticelli, Guillaume, Hong Kong (CN); Olivier, Henri-Nicolas, Hong Kong (CN)
(74) Mandataire: Chameroy, Claude

(57) **Abrégé**

La présente invention se rapporte à un dispositif portable de communication téléphonique sans fil (1) comprenant :
- une oreillette (10), destinée à être disposée au voisinage de l'oreille d'un utilisateur et comportant au moins un boîtier creux (11) destiné notamment à loger une batterie rechargeable, et un organe de reproduction sonore (13) lié au boîtier creux (11) et destiné à être disposé à proximité immédiate du pavillon de l'oreille de l'utilisateur, et
- un socle de recharge électrique (20) comportant une batterie (22) et présentant un logement (21) adapté pour recevoir l'oreillette (10) dans une position de recharge de celle-ci,

**caractérisé en ce qu**'il comporte en outre un organe de couplage magnétique (30) adapté pour maintenir l'oreillette (10) dans le logement (21) du socle (20) dans la position de recharge.

## Description

La présente invention concerne un dispositif portable de communication téléphonique sans fil, comprenant une oreillette, destinée à être disposée au voisinage de l'oreille d'un utilisateur, un socle de recharge électrique et un organe de couplage entre les deux.

Actuellement, les oreillettes jumelées avec un téléphone cellulaire par l'intermédiaire d'une liaison sans fil de type Bluetooth se rechargent grâce à un socle adapté sur lequel elles reposent. Cependant, la liaison entre ces deux éléments est souvent de mauvaise qualité. Ainsi, l'oreillette peut bouger par rapport à son socle, ce qui peut engendrer des faux contacts et une mauvaise connexion électrique. La recharge de la batterie de l'oreillette ne se fait donc pas correctement. Par ailleurs, l'oreillette peut facilement tomber de son socle, ce qui coupe la connexion électrique mais surtout peut provoquer la détérioration de l'oreillette en cas de chute et de choc trop important.

Un but de la présente invention est donc de résoudre le problème cité précédemment à l'aide d'une solution simple à mettre en oeuvre, fiable et peu coûteuse.

Ainsi, la présente invention a pour objet un dispositif portable de communication téléphonique sans fil comprenant :
- une oreillette, destinée à être disposée au voisinage de l'oreille d'un utilisateur et comportant au moins un boîtier creux destiné notamment à loger une batterie rechargeable, et un organe de reproduction sonore lié au boîtier creux et destiné à être disposé à proximité immédiate du pavillon de l'oreille de l'utilisateur, et
- un socle de recharge électrique comportant une batterie et présentant un logement adapté pour recevoir l'oreillette dans une position de recharge de celle-ci,
ledit dispositif étant caractérisé en ce qu'il comporte en outre un organe de couplage magnétique adapté pour maintenir l'oreillette dans le logement du socle dans la position de recharge

Selon des modes de réalisation préférés, le dispositif selon la présente invention peut comprendre en outre l'une au moins des caractéristiques suivantes :
- l'organe de couplage magnétique comporte un aimant et une plaque métallique prévus respectivement dans le socle et dans l'oreillette, ou inversement, ledit aimant et ladite plaque coopérant ensemble pour former le couplage magnétique ;
- l'oreillette est munie d'un aimant plat noyé dans l'épaisseur de l'une de ses faces et le socle est muni d'une plaque métallique noyée dans l'épaisseur d'une face de son logement, l'aimant étant disposé au regard de la plaque dans la position de recharge ;
- l'oreillette est munie de contacteurs électriques coopérant avec des plots de connexion électrique prévus sur le socle de recharge de sorte que, dans la position de recharge, lesdits plots sont au contact des contacteurs pour établir une connexion électrique entre la batterie du socle et la batterie de l'oreillette ;
- les contacteurs électriques comprennent deux lamelles métalliques souples affleurant une face de l'oreillette et les plots de connexion électrique font saillie de la face du socle qui est disposée en regard de la face de l'oreillette munie des lamelles dans la position de recharge de cette dernière ;
- le socle est muni d'un connecteur pouvant être branché sur un chargeur afin de recharger la batterie du socle et/ou de l'oreillette ;
- le connecteur est un connecteur mâle de type USB ; et
- le socle est équipé d'un capuchon de protection du connecteur amovible.

Avantageusement, l'appareil de communication téléphonique sans fil est une oreillette à la norme Bluetooth.

L'invention va maintenant être décrite plus en détail en référence à des modes de réalisation particuliers donnés à titre d'illustration uniquement et représentés sur les figures annexées dans lesquelles :
- la figure 1 est une vue en perspective du dispositif conforme à la présente invention dans son état assemblé ;
- la figure 2 est une vue en perspective du dispositif dans un état désassemblé ;
- la figure 3 est une vue en perspective du dispositif montrant un capuchon en position retirée ;
- la figure 4 est une vue en coupe longitudinale du dispositif dans son état assemblé,
- la figure 5 est une vue en coupe transversale selon la ligne V-V de la figure 4 ;
- la figure 6 est une vue en perspective de dessous d'une oreillette faisant partie du dispositif de la présente invention ; et
- la figure 7 est une vue en perspective éclatée du dispositif avant son assemblage.

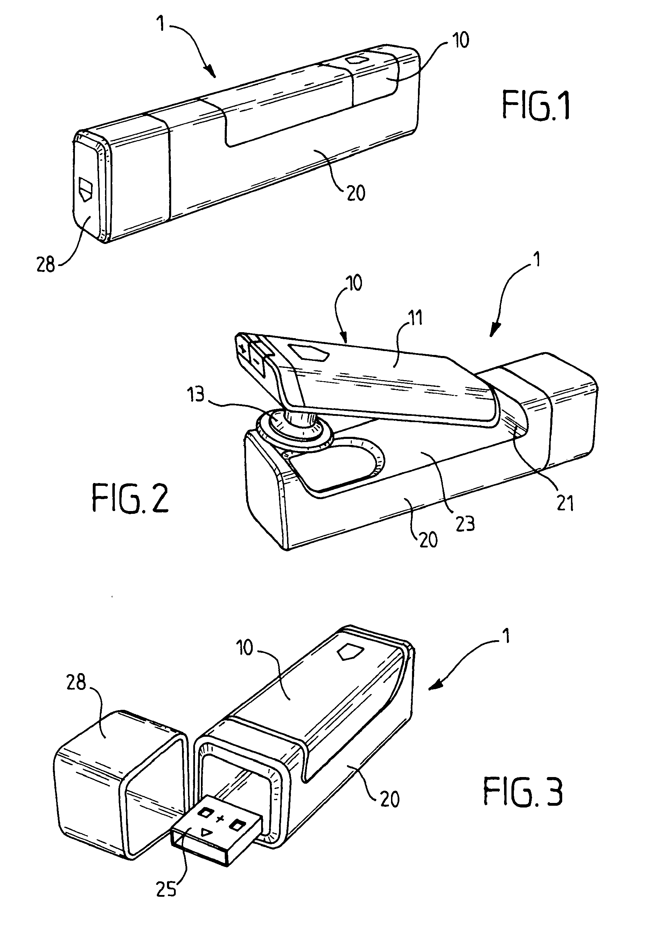

Les figures 1 à 3 représentent un dispositif portable de communication téléphonique sans fil 1 comprenant une oreillette 10 fonctionnant selon la norme Bluetooth afin de pouvoir être jumelé avec un téléphone cellulaire (non représenté) et un socle de chargement 20 adapté pour recevoir ladite oreillette 10 afin de la recharger.

L'oreillette 10 est destinée à être disposée au voisinage de l'oreille d'un utilisateur. Elle comporte un boîtier creux 11 destiné notamment à loger une batterie rechargeable (non représentée), et un organe de reproduction sonore 13 lié au boîtier creux et destiné à être disposé à proximité immédiate du pavillon de l'oreille de l'utilisateur. De préférence, l'organe de reproduction sonore 13 est un haut-parleur se présentant sous la forme d'un champignon faisant sailli sur une face 15 de l'oreillette 10.

Le socle 20 comporte quant à lui un logement creux 21 ayant une forme adaptée à la forme extérieure du boîtier 11 de l'oreillette 10 et de son haut-parleur 13. Ainsi, dans la position de chargement de la batterie de l'oreillette 10, cette dernière s'intègre parfaitement dans le logement 21, comme cela est illustré sur la figure 1. Afin d'éviter que dans cette position, l'oreillette 10 sorte du logement 21, un organe de couplage magnétique 30 est également prévu.

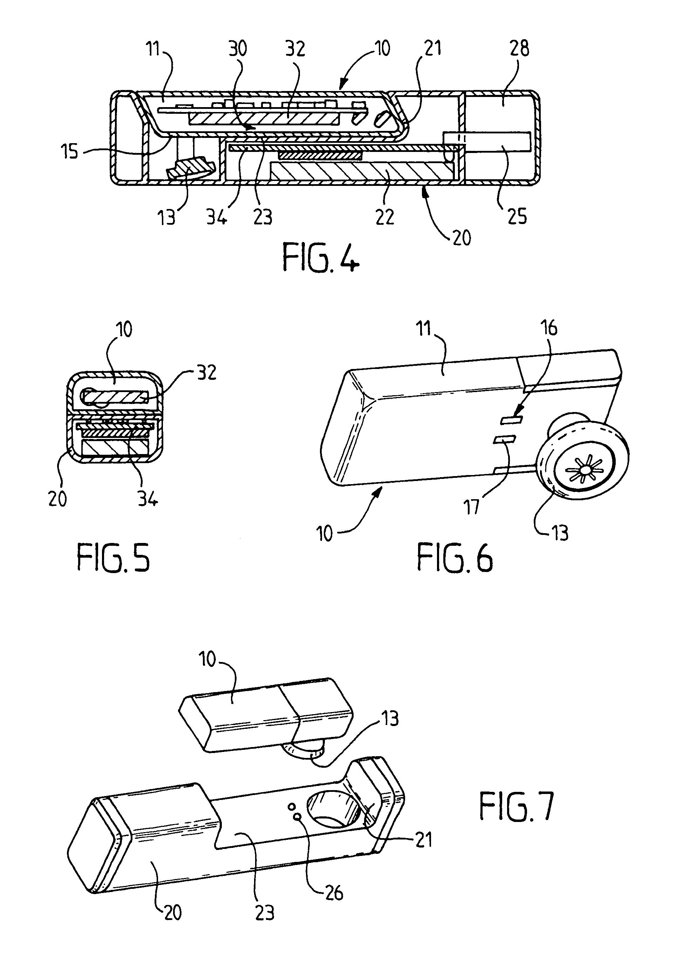

Comme cela est représenté sur les figures 4 et 5, l'organe de couplage magnétique 30 comporte un aimant plat 32 logé dans l'oreillette 10, sous la face 15 portant le haut-parleur 13, et une plaque 34 noyée dans l'épaisseur de la face 23 du socle 20 faisant face à la face 15 de l'oreillette 10, ledit aimant 32 et ladite plaque 34 coopérant ensemble pour former le couplage magnétique.

Le socle 20 renferme également une batterie 22 pouvant être rechargée à son tour lorsqu'il est branché sur une source de courant tel que le secteur ou sur un chargeur annexe par l'intermédiaire d'un connecteur 25 tel qu'une prise mâle de type USB. Le socle 20 est également muni d'un capuchon d'extrémité 28 destiné à recouvrir la prise USB 25 lorsqu'elle n'est pas utilisée.

Comme cela est visible sur les figures 6 et 7, l'oreillette 10 est munie de contacteurs électriques 16 coopérant avec des plots de connexion électrique 26 prévus sur le socle de recharge 20. Plus précisément, les contacteurs électriques 16 comprennent deux lamelles métalliques souples 17 et les plots de connexion électrique 26 font saillie de la face 23 du socle 20.

Ainsi, dans la position de recharge (figure 1), les plots 26 sont au contact des lamelles 17 pour établir une connexion électrique entre la batterie du socle et la batterie de l'oreillette 10.

Il va de soi que la description détaillée de l'objet de l'Invention, donnée uniquement à titre d'illustration, ne constitue en aucune manière une limitation, les équivalents techniques étant également compris dans le champ de la présente invention.

## Revendications

1. Dispositif portable de communication téléphonique sans fil (1) comprenant :
- une oreillette (10), destinée à être disposée au voisinage de l'oreille d'un utilisateur et comportant au moins un boîtier creux (11) destiné notamment à loger une batterie rechargeable, et un organe de reproduction sonore (13) lié au boîtier creux (11) et destiné à être disposé à proximité immédiate du pavillon de l'oreille de l'utilisateur, et
- un socle de recharge électrique (20) comportant une batterie (22) et présentant un logement (21) adapté pour recevoir l'oreillette (10) dans une position de recharge de celle-ci,
**caractérisé en ce qu'**il comporte en outre un organe de couplage magnétique (30) adapté pour maintenir l'oreillette (10) dans le logement (21) du socle (20) dans la position de recharge.

2. Dispositif selon la revendication 1, **caractérisé en ce que** l'organe de couplage magnétique (30) comporte un aimant (32) et une plaque métallique (34) prévus respectivement dans le socle (20) et dans l'oreillette (10), ou inversement, ledit aimant (32) et ladite plaque (34) coopérant ensemble pour former le couplage magnétique.

3. Dispositif selon la revendication 2, **caractérisé en ce que** l'oreillette (10) est munie d'un aimant plat (32) noyé dans l'épaisseur de l'une de ses faces (15) et le socle (20) est muni d'une plaque métallique (34) noyée dans l'épaisseur d'une face (23) de son logement (21), l'aimant (32) étant disposé au regard de la plaque (34) dans la position de recharge de l'oreillette (10).

4. Dispositif selon l'une quelconque des revendications précédentes, **caractérisé en ce que** l'oreillette (10) est munie de contacteurs électriques (16) coopérant avec des plots de connexion électrique (26) prévus sur le socle de recharge (20) de sorte que, dans la position de recharge, lesdits plots (26) sont au contact des contacteurs (16) pour établir une connexion électrique entre la batterie du socle (20) et la batterie de l'oreillette (10).

5. Dispositif selon la revendication 4, **caractérisé en ce que** les contacteurs électriques (16) comprennent deux lamelles métalliques souples (17) affleurant une face (15) de l'oreillette et les plots de connexion électrique font saillie de la face (23) du socle (20) qui est disposée en regard de la face (15) de l'oreillette (10) munie des lamelles (17), dans la position de recharge de ladite oreillette.

6. Dispositif selon l'une quelconque des revendications précédentes, **caractérisé en ce que** le socle (20) est muni d'un connecteur (25) pouvant être branché sur un chargeur afin de recharger la batterie du socle et/ou de l'oreillette.

7. Dispositif selon la revendication 6, **caractérisé en ce que** le connecteur (25) est un connecteur mâle de type USB.

8. Dispositif selon la revendication 6 ou 7, **caractérisé en ce que** le socle est équipé d'un capuchon amovible de protection (28) du connecteur (25).

9. Dispositif selon l'une quelconque des revendications précédentes, **caractérisé en ce qu'**il s'agit d'une oreillette à la norme Bluetooth.
